# EUROPEAN PATENT APPLICATION

(11) **EP 1 842 644 A1**
(43) Date of publication of application: **10.10.2007**
(21) Application number: 06425243.0
(22) Date of filing: 07.04.2006
(51) Int. Cl.: B28D 1/06

(54) **Blades holder frame to cut blocks of natual stones**

(71) Applicant: Pedrini, Luigi, 24060 Carobbio Degli Angeli (Bergamo) (IT)
(72) Inventor: Pedrini, Luigi, 24060 Carobbio Degli Angeli (Bergamo) (IT)
(74) Representative: Rustichelli, Monica

(57) **Abstract**

The blade holder frame, being mobile by an alternate motion on one or more natural stone blocks (18, 19), to cut by means of blades (3) tensioned between the end crosspieces (12, 13) of said blade holder frame (2) or mount (1), has said crosspieces being spaced in the cutting length by side longitudinal members (11) and it is characterised by at least a central connection and support longitudinal member (16) of said crosspieces (12, 13) in the cutting front width, to define at least two cutting ports (L) thereof; the cutting blade tensioning forces being distributed on the side longitudinal members and on said at least one central longitudinal member.

## Description

The present invention relates to an improved blade holder frame, i.e. a device being known in the natural stone cutting technique wherein parallel blades are tensioned within a rectangular force structure, which is then moved by an alternate motion on the natural stone block, be it marble, granite or other types of natural stone, to allow the block be cut in slabs or strips. It also describes the alternative construction of the blade holder frame movement structure with respect to known types, as well as frame shapes for a more advantageous cutting.

The prior art comprises several types of machines for moving blade holder frames more commonly called column-structured frames wherein the blade holder frame is moved by an alternate motion on guides or even let oscillating by hunting supported by pairs of oscillating arms on said structure

It is known that the cutting speed is adjusted according to the material to be cut, with the number of strokes per time unit, and according to the shape and sturdiness of the blade holder frame and of the machine structure as a whole. Therefore the horsepower installed in a frame will be equal to the highest one being required to cut a block or set of blocks at the project speed on the concerned material, which can be divided into hard stones, such as granite, or softer ones like marble.

Blocks almost have the same size, being carried from the quarry into the cutting plant, since they cannot exceed the maximum size during transport and, not to limit the size of the slabs to be cut, they have seldom a reduced original size with respect to the maximum allowed. Moreover, frames with a blade holder mount have been realised, especially to cut granite blocks, having a cutting front being wide enough to cut even three adjacent blocks at the same time.

However, when tooling not perfectly sound quarry materials, blocks are trimmed beforehand to the maximum achievable size to remove cracks and then, by dividing them in smaller blocks, a considerable number of blocks having a smaller size than the maximum one the frame can cut is thus created in the cutting plant, but having to be cut in turn in a cheap and fast way, at present by putting them alongside and with similar size in a single frame cutting operation, i.e. with a blade holder frame having a sufficiently wide cutting front.

At present the technical problem of cutting smaller-sized blocks is solved in two ways. A first way is to put a single block in a normal-sized frame, therefore the frame tools the small block with the structure, the power and, more generally, the costs of a normal frame. A second way, as above mentioned, is to put several adjacent blocks in the cutting front of the known normal-sized frame.

In both said operating ways, and particularly in the first thereof, it is evident that the working capacity that the normal-sized blade holder frame can limitedly perform is dissipated so to charge a considerably lower volume of cut product with the machine costs, since the starting block, or blocks, is/are smaller-sized.

Thus such a frame is underused to cut small blocks, which can however involve considerable material costs when being considered scraps in all by the producer.

Not least, the same size problem of the frame and corresponding blade holder frame occurs with very wide cutting front frames, which are, as just said, mainly used to cut granite blocks, for the need to realise a blade holder frame being suitable to support the tensioning of the several cutting blades being necessary to cut normally-thick slabs not from one but also from three blocks at the same time.

In fact, the problem of small blocks is known in the art and the solution being provided has been to construct frames having lower weight, size and eventually costs. However known examples have reintroduced the same cutting concept of wider frames involving limited advantages for the producer from the point of view both of the overall machine cost, reduced only by 10-15%, and of the massive size and, then, of the installed power, reduced in turn by limited percentages, requiring high power during the starting or even the shutdown with a through-out size of the fast breaking members. Said problem can certainly be transferred to the construction of wide frames to cut several natural stone blocks at the same time; in this case the aggravating circumstance is the exponential and not-linear increase of the concerned alternate masses when the cutting front increases.

This prior art is susceptible of considerable improvements with respect to the possibility to realise a blade holder frame, or mount, to be used in a frame machine to cut natural stone blocks in slabs, allowing reduced-sized blocks to be cut in a cheap and fast way with respect to the blocks commonly tooled to cut slabs.

Moreover, a last but not least aim is to find a new construction way of the blade holder frame to simultaneously cut in slabs several natural stone blocks, being even standard-sized, allowing the machine construction and operation costs to be considerably reduced

A further improvement concerns the realisation of a machine structure to move the blade holder frame, and mount, allowing the construction and operation costs of the oscillating, or sliding, alternative cutting frame to be considerably reduced.

From the above it derives the need to solve the technical problem to realise a blade holder frame, or mount, allowing small blocks to be cut in slabs in a cheap and fast way. A further aspect of the invention is to define such a shape of the blade holder frame or mount as to allow the construction of a wide cutting front frame, such as to allow several standard-sized blocks to be cut with reduced construction and operation costs.

A further technical problem is to realise a machine structure allowing the present working speed limits to be overcome, allowing construction, working and operation costs to be reduced.

The invention solves said technical problem by adopting: a blade holder frame, being mobile by an alternate motion on one or more natural stone blocks, to cut by means of the blades tensioned between the end crosspieces of said blade holder frame or mount; said crosspieces being spaced in the cutting length by side longitudinal members; characterised in that it has at least a central connection and support longitudinal member of said crosspieces in the cutting front width, to define at least two cutting ports thereof; the cutting blade tensioning forces being distributed on the side longitudinal members and on said at least one central longitudinal member.

By adopting, in a preferred embodiment: two or more central longitudinal members, being spaced apart to distribute in a balanced way the cutting blade tensioning forces.

By adopting, even more, in a further and preferred embodiment: the ports, splitting the blade cutting front, have a constant value.

By adopting, in a preferred embodiment: a blade holder frame with an odd number of central longitudinal members and consequently an even number of ports splitting the cutting front.

Moreover, by adopting, in a further embodiment: a blade holder frame with an even number of central longitudinal members and consequently an odd number of ports splitting the cutting front.

Finally, by adopting an actuating machine of a blade holder frame composed of: a supporting structure of the alternate-motion movement members of the blade holder frame; generation members of the alternate motion transmitted to the blade holder frame with at least one connecting rod and crank mechanism; characterised in that it has related the size of said movement members to the alternate masses moving with the blade holder frame adopted according to one of the previous features.

Further features of the blade holder frame adopted according to the invention will be more clearly apparent from the following description and claims.

An embodiment of the invention is shown, by simple way of example, in the attached three drawings wherein:

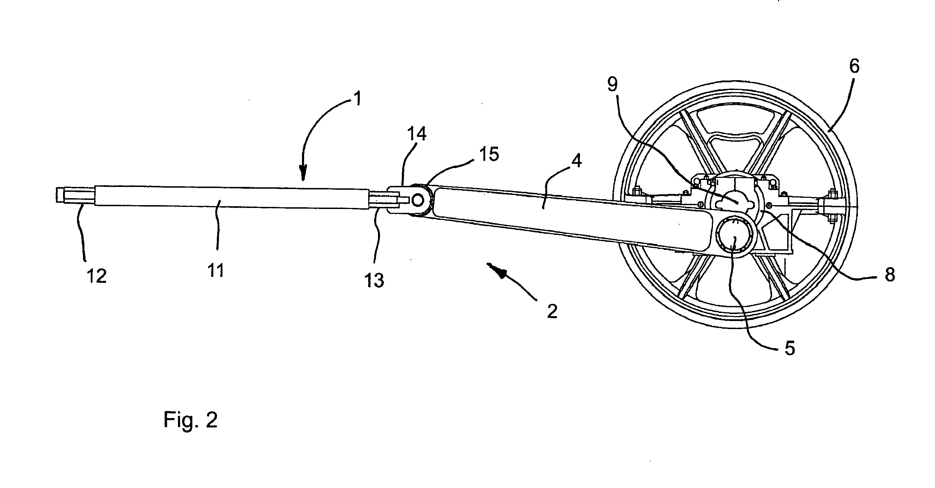

Figure 1 is a plan view of the movement crank gear of a blade holder frame to cut natural stone blocks according to the invention; Figure 2 is the elevation view of the crank gear and blade holder frame, or mount, of Figure 1;
Figure 3 is the perspective and schematic view of a blade holder frame, or mount, according to the invention;
Figure 4 schematically shows the cutting step, by means of the blade holder frame, or mount, according to the invention of a pair of natural stone blocks, in this case already beforehand knobbled.

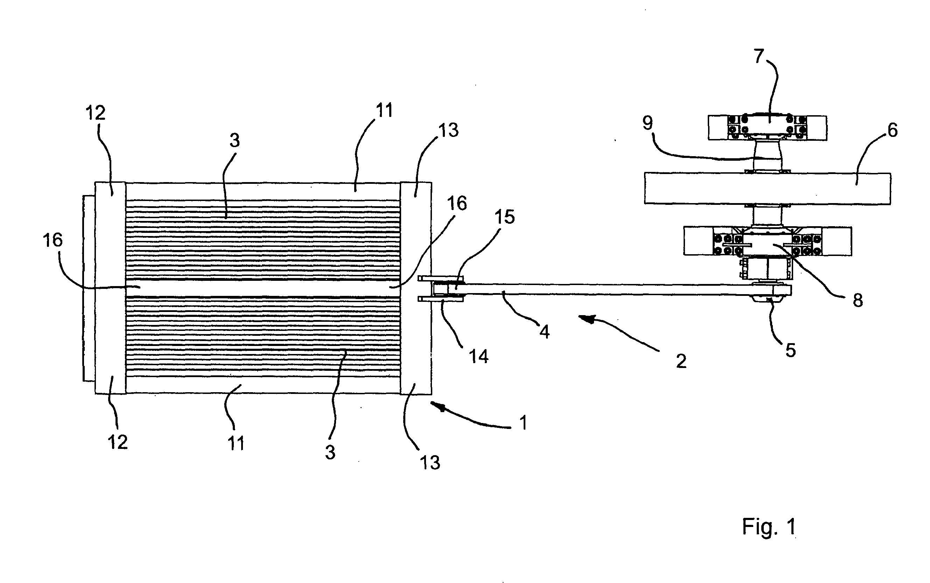

The frame 1 of the blade holder frame 2 with blades 3 can be seen in figure 1, being traditionally connected by means of a connecting rod 4 to a crank 5 of the alternate motion generation mechanism to be imparted to the frame 2. Besides the crank, the flywheel 6 and the supports 7, 8 of the shaft 9 can be seen; the transmission of the rotary motion from a motor to the shaft 9, which occurs in a traditional way. The mount 1 is composed of two side longitudinal members 11, being parallel to the blades 3, and of two crosspieces, being front 12 and back 13, the latter being connected to said connecting rod 4 with an articulation 14 of the connecting rod small end 15; an intermediate longitudinal member 16 is placed in the crosspiece width to halve the overall port of the crosspieces whereon the blade ends rest with the tensioning forces.

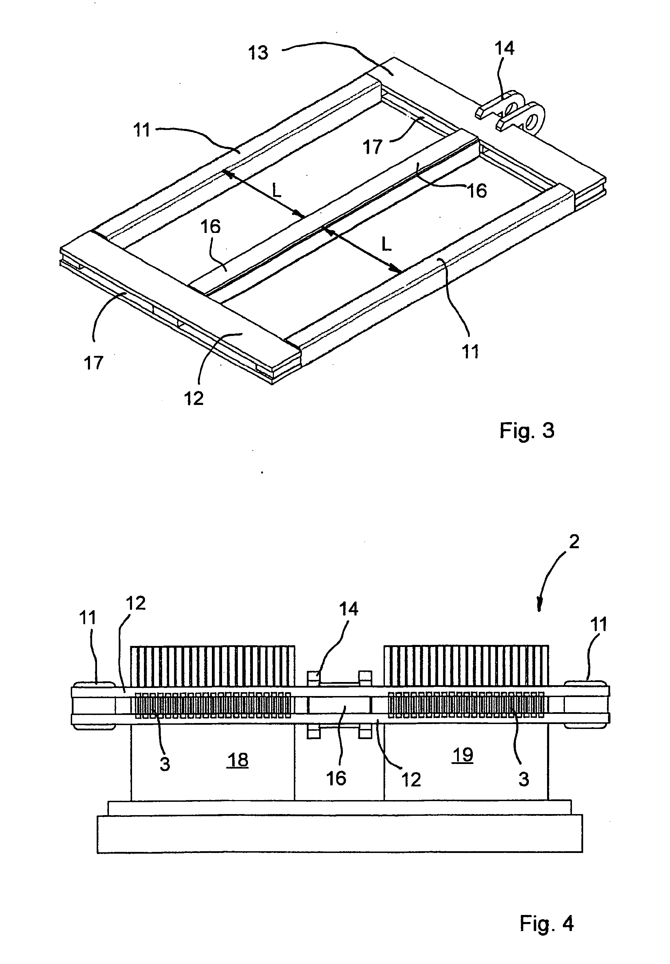

The slots 17 in the crosspieces 12 and 13 to insert and tension the cutting blades 3, not shown here, can be seen in figure 3. The tensioning occurs with known mechanic or hydraulic means, not shown here.

In figure 4, the blade 3 holder frame 2 has an intermediate working position in the two natural stone blocks 18 and 19 during cutting. Said blocks, shown here, are beforehand knobbled with very close measures in the three dimensions in order to stress in the cutting the frame 2 in an averagely uniform way, after a first section with low-speed deepening for the starting cutting.

However, the present invention, allowing the free port L length to be halved, or anyway divided, allows a frame to be constructed having a very light blade 3 holder mount with respect to the known frames with a full port in the mount width. In fact, if a full-port frame, i.e. with a minimum width cutting front of 2 meters, can reach a mass of 9 tons, by only applying a longitudinal member 16, to halve the port, the mass is reduced to only 2 tons. Thus the considerable mass reduction by more than four times allows the motion generation mechanism to be constructed with lighter parts, lightening the connecting rod 4, the crank 5, the shaft 9 and the flywheel 6, as well as the supports 7 and 8.

In present frames, suitable to simultaneously cut two standard natural stone blocks, the alternate mass represented by the blade holder frame is in the order of 36 tons, i.e. an esponential value with respect to the 9 tons of the frame to cut a single block. Consequently the machine cost increases even by 4 times with respect to the cost of the single block frame.

Therefore, with the present invention teaching, it is possible to construct frames having a blade holder mount with double cutting front, i.e. with a 2+2 meter front, with respect to the usual 4 meter front, but with only double alternate masses with respect to the prior art fourfold ones; this impinges, besides on the frame and blade holder mount construction cost, also on the cost of the parts composing the machine movement mechanism, both for the starting and for the breaking. The latter being a very critical step in the cutting handling in case of block or blade yielding.

Not least, then, knobbled blocks 18 and 19 can be higher than the maximum cutting depth presently allowed in block cutting machines, with packed diamond circular blades, so that it is possible to cut slabs or strips yet ready for the following tooling, but bigger-sized in width than allowed in block cutting machines, while the length is always limited by the length of the block being tooled.

The blade 3 holder frame, or mount 1, can have in the front width more than one intermediate longitudinal member 16 so to realise more than two ports L, equally sized, for housing the blades 3. A frame, for example, with two central longitudinal members 16 will be able to simultaneously cut three equally-sized blocks or it will be able to cut a single block in the central port L, keeping balanced cutting and inertial forces concerning the machine structure; moreover, it will be able to cut even only a pair of blocks positioned in the respective side ports, thus realising a high versatility of use.

Therefore the machine has a structure supporting the movement members of the frame 2, or mount 1, already lightened per se, because of the considerably smaller mass of the blade holder mount and of the alternate-motion generating members, but it has an overall cutting front being equal to or higher than the cutting front of present known frames.

The blade holder frame according to the invention cuts at least blocks in pairs, if the mount 1 has only one cross-beam or even, if it has a higher number of odd central longitudinal members, i.e. 3 or 5, blocks are positioned at the same distance from the frame middle, but always in even number. Thus, if the mount 1 has an even number of central longitudinal members, i.e. 2 or 4, the blocks being tooled must always be positioned at the same distance from the middle, but they can also be cut simultaneously in odd or also even number.

After cutting the slabs or strips, they can be then tooled in the known ways for thickness sizing, surface finishing, sectioning in the desired size and trimming or edge shaping, in order to realise a plate-like natural stone element, which, because of the particular way of cutting from the block, can reach a considerable width size, much higher than the size presently achievable with common block cutting machines, meanwhile saving considerable working times with respect to cutting with circular diamond blades which, for higher widths than the blade cutting depth, are known to use the cutting on the two block sides.

The reduction in the alternate-motion mass and in the mass of movement generation members also allows the considerable reduction in the installed power and, consequently, a reduction in the energy consumed when starting cutting the slabs or strips from the natural stone block. Last but not least advantage, the alternate-motion mass reduction allows the frame fast shutdown steps to be managed in a safer and cheaper way. In fact, it is known to use mechanic, hydraulic or electric devices, such as inverters, which, with a smaller mass, can be sized accordingly, thus generating a considerable lower cost.

In the practical implementation, the materials, size, executive particulars could be different from the indicated ones, but technically equivalent thereto, thus always falling within the scope of protection of the present invention. Therefore, although less conveniently, the port L of the cutting front between the side longitudinal members and the central longitudinal members, or even there between, can be different, but providing such amplitudes as to allow standard-sized or small-sized blocks to be cut, although providing the forces generated in the frame middle by the blades 3 during cutting to be kept balanced.

## Claims

1. A blade holder frame, being mobile by an alternate motion on one or more natural stone blocks (18, 19), to cut by means of blades (3) tensioned between the end crosspieces (12, 13) of said blade holder frame (2) or mount (1), comprising said crosspieces being spaced in the cutting length by side longitudinal members (11); **characterised in that** it has at least a central connection and support longitudinal member (16) of said crosspieces (12, 13) in the cutting front width, to define at least two cutting ports (L) thereof; the cutting blade tensioning forces being distributed on the side longitudinal members and on said at least one central longitudinal member.

2. A blade holder frame according to the previous claim 1, **characterised in that** it has two or more central longitudinal members (16), being spaced apart to distribute in a balanced way the cutting blade tensioning forces on side and central longitudinal members.

3. A blade holder frame according to one of the previous claims 1, 2, **characterised in that** it has the ports (L), splitting the blade cutting front, with a constant value.

4. A blade holder frame according to one of the previous claims 1, 2, 3, **characterised in that** it has a blade holder frame (2) with an odd number of central longitudinal members (16) and consequently an even number of ports (L) splitting the cutting front.

5. A blade holder frame, according to one of the previous claims 1, 2, 3, **characterised in that** it has a blade holder frame (2) with an even number of central longitudinal members and consequently an odd number of ports (L) splitting the cutting front.

6. A machine for actuating the blade holder frame (2) composed of: a supporting structure of the alternate-motion movement members of the blade holder frame; generation members of the alternate motion (4, 5, 6, 7, 8, 9) transmitted to the blade holder frame with at least one connecting rod (4) and crank (5) mechanism; **characterised in that** it has related the size of said alternate-motion generation members to the alternate masses moving with the blade holder frame adopted according to one of the previous claims 1-5.
